# EUROPEAN PATENT APPLICATION

(11) **EP 2 458 886 A1**
(43) Date of publication of application: **30.05.2012**
(21) Application number: 11188969.7
(22) Date of filing: 14.11.2011
(51) Int. Cl.: H04N 21/436, H04N 21/433, G11B 27/10, H04L 12/28, H04N 5/76

(54) **Control apparatus and control method for resuming content**

(30) Priority: 24.11.2010 JP 2010260762
(71) Applicant: Hitachi Consumer Electronics Co., Ltd., Tokyo (JP)
(72) Inventor: Nozoe, Takahiko, Chiyoda-ku, Tokyo 100-8220 (JP); Okamoto, Hiroo, Chiyoda-ku,, Tokyo 100-8220, (JP); Kamogawa, Kouji, Chiyoda-ku, Tokyo 100-8220 (JP)
(74) Representative: Moore, Graeme Patrick

(57) **Abstract**

A control method of controlling a transmitting unit (110, 120) to transmit a content via a network (100) and a receiving unit (130, 140) to receive the content via a network (100). The method includes the steps of obtaining from the transmitting unit, resume information indicating a position at which reproduction of a content is suspended (1221); transmitting to the receiving unit, an indication to reproduce the content beginning at the position which is indicated by the resume information and at which reproduction of a content is suspended (1222); obtaining from the receiving unit, content reproducing information indicating the position at which the content is to be reproduced (1225); transmitting an indication to stop reproduction of the content to the receiving unit (1226); creating resume information by use of the content reproducing information obtained from the receiving unit (1227); and transmitting the resume information to the transmitting unit (1227).

## Description

The present invention relates to content transmission and reception.

For the technical field, JP-A-2005-323068 describes a technique as follows. An object thereof is to provide a home network Audio Video (AV) server and a home network AV server program with improved usability in which even when a user suspends reproduction of a content while viewing the content, it is possible to easily resume the reproduction of the content beginning at the position at which the reproduction is suspended. To achieve the object, a home network AV server includes an AV content data group storage 111, a content information list storage 112, and a transmission data creator 116 which refers, in response to a transmission request from a client terminal 21 or 22 connected via a network thereto, to the storages to create content data according to the transmission request, to thereby transmit the created content data to the client terminal. The home network AV server includes a data transmission position detector 212 to detect a current transmission position of content data and a resume content information creator 213 to create resume content information including, as a reproduction start position, a data position at which reproduction of a content is suspended when a reproduction stop request is received. When starting the suspended reproduction of the content data, the home network AV server refers to the resume content information in the content information list storage to transmit the content data beginning at the reproduction start point.

However, JP-A-2005-323068 has not given consideration to reproduction of a content in a server, compatibility between a server and a client, and a control apparatus or a controller to control the server and the client.

As an example of one of the methods according to the present application, there is provided a control method of controlling a transmitting unit to transmit a content via a network and a receiving unit to receive the content via a network. The method includes the steps of obtaining from the transmitting unit, resume information indicating a position at which reproduction of a content is suspended; transmitting to the receiving unit, an indication to reproduce the content beginning at the position which is indicated by the resume information and at which reproduction of a content is suspended; obtaining from the receiving unit, content reproducing information indicating the position at which the content is to be reproduced; transmitting an indication to stop reproduction of the content to the transmitting unit; creating resume information by use of the content reproducing information obtained from the receiving unit; and transmitting the resume information to the transmitting unit.

According to the method, when a user desires to view a content via a network, it is possible to reproduce the content at a position appropriate for the user. Hence, usability and operability is improved for the user.

Other objects, features and advantages of the invention will become apparent from the following description of the embodiments of the invention taken in conjunction with the accompanying drawings.

In the drawings:
FIG. 1 is a block diagram showing an example of a configuration of a home network system;
FIG. 2 is a block diagram showing an example of a configuration of a transmitting unit 110;
FIG. 3 is a block diagram showing an example of a configuration of a receiving unit 130 or 140;
FIG. 4 is a diagram showing an example of server unit information delivered from the transmitting unit 110;
FIG. 5 is a diagram showing an example of service description information delivered from the transmitting unit 110;
FIG. 6 is a diagram showing an example of resume information including content information controlled by the transmitting unit 110;
FIG. 7 is a flowchart showing an example of a procedure in which resume information is communicated between the transmitting unit 110 and the receiving unit 130 or 140 to reproduce a content or to suspend reproduction of a content;
FIG. 8 is a diagram showing an example of a display screen presented to the user when the receiving unit 130 or 140 reproduces a content;
FIG. 9 is a diagram showing an example of a layout of information associated with content data used by the transmitting unit 110 and the receiving units 130 and 140;
FIG. 10 is a block diagram showing an example of a configuration of a home network system;
FIG. 11 is a block diagram showing an example of a configuration of a control apparatus or a controller 150; and
FIG. 12 is a flowchart showing an example of a procedure in which resume information is communicated among the transmitting unit 110, the receiving unit 130 or 140, and the controller 150.

Referring now to the drawings, description will be given of a favorable embodiment according to the present invention. However, the present invention is not restricted by the embodiment.

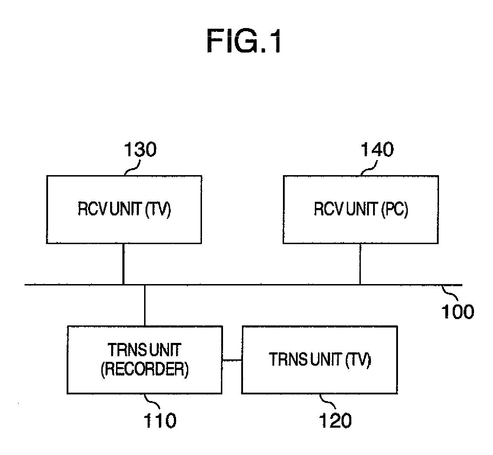

FIG. 1 shows an example of a configuration of a home network system including transmitting (TRNS) units and receiving (RCV) units according to the present invention.

The transmitting unit 110 is a server to transmit a content of, for example, a content of a mobile picture, an audio content, or a video content to a receiving unit such as a receiving unit 130 or 140, which will be described later, on a home network 100. The transmitting unit 110 controls resume information indicating a position at which reproduction of a content is suspended.

The transmitting unit may be, for example, a recorder and a television set including a recording function. To employ, for example, a recorder not including a display, a display 120 such as a television set is connected to the recorder as shown in FIG. 1 to display a content reproduced.

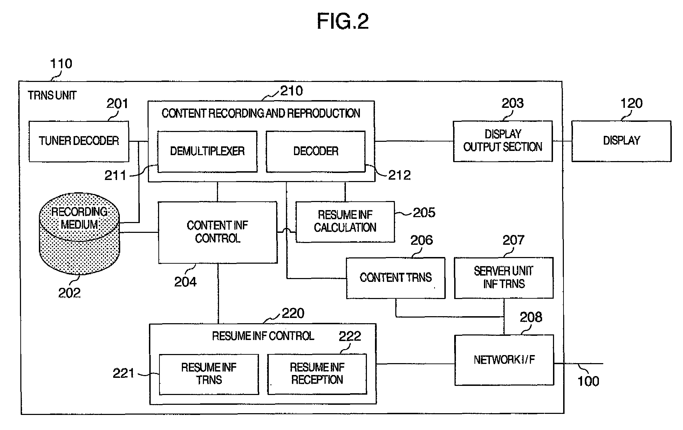

The connection may be implemented by an analog interface to output analog video/audio data or by a digital interface to output digital video/audio data. The configuration of the transmitting unit 110 will be described in detail later by referring to FIG. 2.

The receiving unit 130 or 140 is a client to receive a content of a mobile picture, an audio content, or a video content from the transmitting unit 110 on the home network 100. The receiving unit communicates with the transmitting unit 110, resume information (INF) indicating a position at which reproduction of a content is suspended.

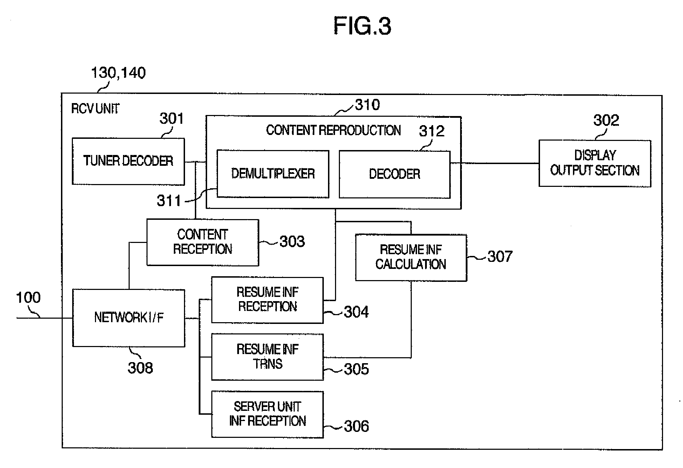

The receiving unit may be, for example, a television set or a Personal Computer (PC). Although not shown, when the receiving unit is, for example, a Set Top Box (STB) not including a display, a display such as a television set is connected thereto like in the case of the transmitting unit 110, to display a content reproduced. Details of a configuration example of each of the receiving units 130 and 140 will be described later by referring to FIG. 3.

Although not described in conjunction with the present embodiment, there may be configured a unit including both of the functions of the transmitting and receiving units. In such unit, it is only required to implement respective functions (configurations and control methods) of the transmitting and receiving units, which will be described later. The home network 100 includes, for example, an Internet Protocol (IP) network.

Referring next to FIG. 2, description will be given in detail of a configuration example of the transmitting unit 110.

The transmitting unit 110 receives digital broadcasting to record and to reproduce a content as well as to transmit the content to a receiving unit on the home network 110. The content to be recorded may be IP- broadcasted via a network or downloaded via a network. In the description below, the system uses an image compression technique called Moving Picture Experts Group (MPEG) in which signals are encoded through MPEG to be multiplexed through MPEG2-TS.

A tuner decoder 201 receives signals of digital broadcasting transmitted via broadcasting networks, for example, by radio (satellite or terrestrial broadcasting) and via a cable. The tuner decoder 201 conducts channel selecting and detecting operations for a frequency of a channel designated by an indication from, for example, a remote controller of a user. Also, the tuner decoder 201 outputs a transport stream of the MPEG-TS signal after digital demodulation and error correction via a selector, not shown, to a demultiplexer 211.

The demultiplexer 211 demultiplexes the MPEG2-TS signal inputted thereto to obtain a transport packet of a channel (program) designated by an indication from, for example, a remote controller of a user. In reproduction of a content, the demultiplexer 211 demultiplexes the transport packet to obtain video and audio Packetized Elementary Streams (PES) or Elementary Streams (ES) to output the streams to a decoder 212. In recording a content, the demultiplexer 211 further adds information of a time stamp to the transport packet and then outputs the resultant packet to a content controller 204.

When reproducing a content, the decoder 212 obtains the video and audio PES or ES from the transport packet to decode the PES or ES and delivers the decoded video and audio signals to a display output section 203.

The display output section 203 outputs the decoded video and audio signals via a digital and/or analog interface to a display 120 externally arranged. Operation screen images such as a menu and a list of contents which are created by a graphic section, not shown, and which are to be presented to the user are mixed with the decoded video signals, and the obtained signals are fed to the display 120.

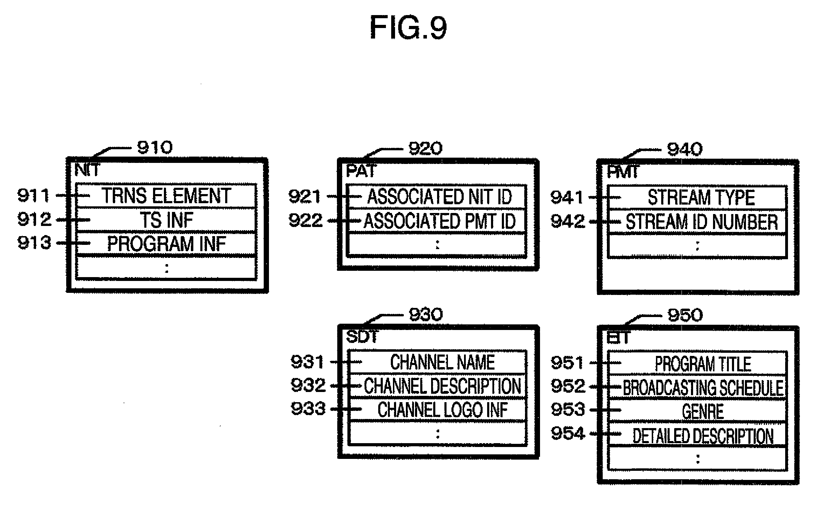

When recording a content, the demultiplexer 211 obtains, from the transport packet of a channel (program) designated by an indication from a user's remote controller, information items such as a title, a genre, and a format of a channel (program) which are to be recorded in a recording medium 202, and then outputs the information items to a content information controller 204. The information items such as a title, a genre, and a format are stored, for example, in PSI or SI information of MPEG-TS. An outline of PSI and SI will be described later by referring to FIG. 9.

The content information controller 204 creates control information based on information items such as a title from the demultiplexer 211 and records associated information for the transport packet received from the demultiplexer 211 in the recording medium 202 based on the control information. Before recording the information, the controller 204 appropriately encrypts the signals by an encrypting section, not shown.

When transmitting a content recorded in the recording medium 202 to the receiving unit 130 or 140 on the home network 100, the transmitting unit 110 sequentially reads transport packets of the content recorded in the recording medium 202 indicated by an operation of, for example, a user's remote controller and then delivers the transport packets to a content transmitting section 206. In the operation, the content is decoded by an encrypting and decoding section, not shown, and the decoded content is encrypted to be outputted to the home network 100.

When the decoded transport packet including a time stamp is received, the content transmitting section 206 removes information of the time stamp therefrom to output the transport packet to a network InterFace (I/F) section 208. Also, the content transmitting section 206 receives via the network I/F section 208 a content transmission (TRNS) start or suspension request from the receiving unit 130 or 140.

The content transmission start request includes as parameters a position at which the content is to be transmitted and the length of the content. On receiving the request, the content transmitting section 206 appropriately performs, according to the request, control of the top position designation and the length designation for a desired content recorded in the recording medium 202 to read the transport packet therefrom and then outputs the packet to the network I/F section 208. When the transmission suspension request is received, the content transmitting section 206 suspends the output of the content to the network I/F section 208 and stops the reading of the transport packet from the recording medium 202.

The network I/F section 208 receives the transport packet from the content transmitting section 206 to convert the transport packet according to a format of a transmission standard and outputs the converted transport packet via the home network 100 to the receiving unit 130 or 140 while conducting flow control. Additionally, the network I/F section 208 is also used when information items including resume information, server unit information, and service description information, which will be described later, are transmitted to and/or received from the receiving unit 130 or 140 on the home network 100.

The transmitting unit 110 further includes a resume information calculating section 205 to calculate resume information indicating a reproduction suspension position of a content in the recording medium 202, a server unit information transmitting section 207 to transmit therefrom server unit information including information indicating presence of the resume information transmitting function and service description information indicating a control method thereof, and a resume information controller 220 to control the reproduction suspension position of a content in the recording medium 202.

The resume information controller 220 includes a resume information transmitting section 221 to transmit resume information via the network I/F section 208 to the receiving unit 130 or 140 and a resume information receiving section 222 to receive resume information indicating a reproduction suspension position of a content in the receiving unit 130 or 140.

Referring next to FIG. 3, description will be given in detail of a configuration example of the receiving units 130 and 140, specifically by use of the receiving unit 130 as an example.

The receiving unit 130 receives a content via digital broadcasting or from the transmitting unit 110 on the home network 100 and then reproduces the content.

When receiving digital broadcasting to reproduce a program thereof, a tuner decoder 301 receives a signal of digital broadcasting sent by radio (satellite or terrestrial broadcasting) or via a broadcasting network such as a cable network. The tuner decoder 301 conducts the selecting and detecting operations for a frequency of a channel designated by an indication from, for example, a user's remote controller. The tuner decoder 301 also outputs a transport stream of MPEG2-TS after digital demodulation and error correction, via a selector, not shown, to a demultiplexer 311.

The demultiplexer 311 demultiplexes signals of MPEG2-TS to obtain the transport packet of the channel (program) designated by an indication from the user's remote controller. The demultiplexer 311 further demultiplexes the transport packet to obtain video and audio PES or ES signals to output the resultant signals to a decoder 312.

When reproducing a content received from the transmitting unit 110 on the home network 100, the receiving unit 130 sequentially receives, via a network I/F section 308, transport packets of the content transmitted from the transmitting unit 110 according to an indication of an operation of the user's remote controller.

The network I/F section 308 receives the transport packet to be outputted to a content receiving section 303, via the home network from the transmitting unit 110 while converting the packet according to a format of a transmission standard and conducting flow control. Further, the network I/F section 308 is used when information items including resume information, server unit information, and service description information, which will be described later, are transmitted to the transmitting unit 110 on the home network 100 or are received therefrom.

The transport packet received via the network I/F section 308 is outputted to the content receiving section 303 to be further delivered via a selector, not shown, to the demultiplexer 311. In the operation, the content encrypted when it is transmitted via the network IF is decoded by a network transmission decoder, not shown. Also, in response to an indication of an operation of a user's remote control, for example, an indication of reproduction beginning at a top, an indication of fast feed reproduction, an indication to initiate suspension of reproduction, or an indication to terminate the suspension of reproduction, the content receiving section 303 transmits via the network IF 308 to the transmitting unit 110, a transmission start request or a transmission suspension request by adding as parameters a position at which the content is to be transmitted and its length.

The demultiplexer 311 demultiplexes the transport packet received from the content receiving section 303 to obtain video and audio PES or ES signals and then outputs the obtained signals to a decoder 312.

The decoder 312 decodes the audio and video PES or ES signals to output the resultant video and audio signals to a display 3 02.

The display 302 displays an image of the video and audio signals thus decoded. The display 302 mixes operation screen images such as a menu and a list of contents which are created by a graphic section, not shown, and which are to be presented to the user, with the decoded video signals, and displays an image of the obtained signals.

The receiving unit 130 also includes a resume information calculating section 307 to calculate resume information indicating a reproduction suspension position of a content received from the transmitting unit 110 and reproduced as above, a server unit information receiving section 306 to receive via the network I/F 308 server unit information including information indicating presence of the resume information transmitting function and service description information indicating a control method thereof, a resume information receiving section 304 to receive resume information from the transmitting unit 110, and a resume information transmitting section 305 to transmit therefrom resume information indicating the reproduction suspension position of a content in the receiving unit 130.

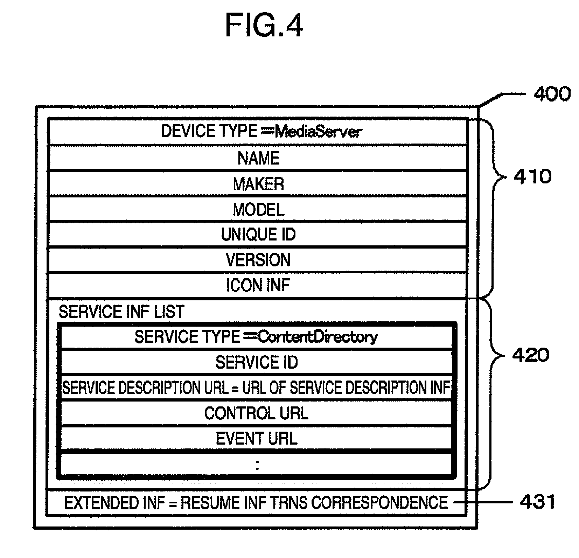

Referring now to FIG. 4, description will be given of an example of the server unit information including information indicating presence of a resume information transmitting function. The transmitting unit 110 transmits (responds) the information in response to a request from the receiving unit 130 or 140. The information is held in the server unit information transmitting section 207 described by referring to FIG. 2.

The server unit information 400 mainly includes device information 410 indicating a type and a model of a unit and a service information list 420 indicating information of at least one service provided by the server unit. The configuration of the server unit information 400 is not unique to the transmitting unit (server). The values of the information items therein indicate that the unit is a transmitting unit (server).

As FIG. 4 shows, the device information 410 includes information of the server unit associated with the server unit information 400. Specifically, for each unit, the device information 410 includes a device type indicating a type of the unit, a name, a maker name, a model name, a unit Identification (ID), a version, and icon information. For the transmission unit 110, the device type is designated as "Media Server" as in FIG. 4 to indicate that the unit is a transmission unit (server).

The service information list 420 includes information of the service provided by the server unit associated with the server unit information 400. Specifically, for each service, the service information list 420 includes a service type indicating a type of the service, a service ID, a service description Uniform Resource Locator (URL) indicating an access destination for details about control of the associated service, a control URL indicating a control destination of the service, and an event URL indicating a notification destination of the service.

As shown in FIG. 4, the present embodiment uses a service to supply a content list for the service type indicated as "ContentDirectory". By using a control method described in service description information 500 indicating details of control of the service, which will be described later, the receiving units 130 and 140 are able to obtain resume information for each content.

Information indicating presence of the resume information transmitting function according to the present invention is described in extended information 431, namely, in other than the device information 410 and the service information list 420. As a result, a receiving unit not coping with the use of the resume information transmitting function is able to interpret the device information 410 and the service information list 420 in the server information 400.

It is also possible to describe the information indicating presence of the resume information transmitting function in the device information 410 and the service information list 420. In such situation, the information may be indicated as extended information or may be described as a last entry in the device information 410 and the service information list 420.

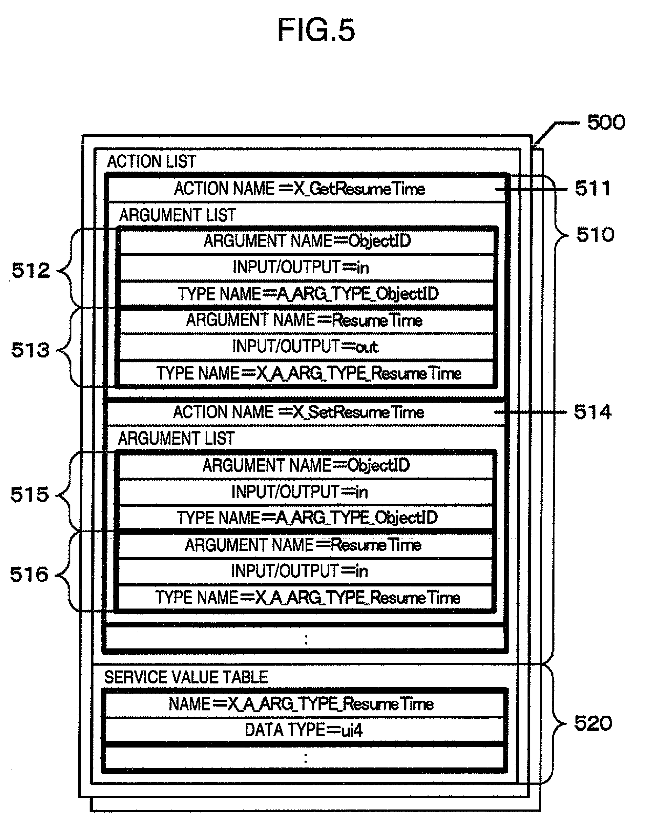

Referring now to FIG. 5, description will be given of a configuration example of the service description information 500 indicating details of control of a service to supply a content list the service type of which is "ContentDirectory". The information is transmitted (returned) by the transmitting unit 110 in response to a request from the receiving unit 130 or 140 and is held in the server unit information transmitting section 207 described in conjunction with FIG. 2.

The service description information 500 primarily includes, for each service, an action list 510 indicating at least one action (control) method for the service and a service value table 520 indicating a type of an input or output value for the action described in the action list 510.

As FIG. 5 shows, for each action, the action list 510 includes an action name and an argument list indicating arguments to be used in the action. For each argument, the argument list includes an argument name, an input or output indication, and a type name. FIG. 5 shows a definition of actions to obtain and to set resume information according to the present embodiment.

In an action indicated by action name "X_GetResumeTime" 511, the transmitting unit 110 returns resume information 632, which will be described later, in response to an information acquisition request issued from the receiving unit 130 or 140. Specifically, the receiving unit 130 or 140 issues a request to obtain resume information to the transmitting unit 110 by designating an argument indicated in an argument field 512 (argument name "ObjectID").

After having received the request, the transmitting unit 110 returns resume information including an argument designated in an argument field 513 (argument name "ResumeTime") to the receiving unit 130 or 140. The argument name "ObjectID" is an identification name uniquely indicating a content to be transmitted from the transmitting unit 110. Details of the identification will be described later. In short, in this action, the transmitting unit 110 returns resume information associated with the content designated by the receiving unit 130 or 140.

Action name "X_SetResumeTime" 514 indicates that the transmitting unit 110 sets (updates), in response to an information setting request from the receiving unit 130 or 140, resume information 612, which will be described later. Concretely, the receiving unit 130 or 140 issues to the transmitting unit 110 a request to set resume information by designating arguments respectively indicated in an argument field 515 ("ObjectID") and an argument field 516 ("ResumeTime"). On receiving the setting request, the transmitting unit 110 sets (updates) a resume information field 612, which will be described later, corresponding to the content indicated by "ObjectID" in the argument field 515, by use of "ResumeTime" indicated in the argument field 516. That is, in this action, the transmitting unit 110 sets (updates) the resume information associated with the content designated by the receiving unit 130 or 140.

The service value table 520 describes the type of an input or output value for an action as described above. For each type, this table includes a name (corresponding to the type name in the action list 510) and a data type thereof (a character string, an unsigned 4-byte integer, etc.) as shown in FIG. 5. For the "X_GctResumeTime" action and the "X_SetResumeTime" action, a type called "X_A_ARG_TYPE_ResumeTime" is employed. Hence, the type is explained hereinafter. ("ui4" of unsigned 4-byte integers is set as the data type.)

That is, argument "ResumeTime" is represented by a value of unsigned 4-byte integer type. Although the value indicates a resume position, the transmitting unit 110 and the receiving unit 130 or 140 mutually interpret this value. Hence, the unit of the numeric value for a packet position or time (e.g., seconds or milliseconds) is uniquely defined by use of argument "ResumeTime" (e.g., in milliseconds). To employ another unit, it is also possible that the argument name is replaced by another name or the type is designated as a character string, or the unit is represented by another argument.

By referring to the server unit information 400 and the server description information 500, the receiving unit 130 or 140 is able to obtain and to set resume information. The names described above are only examples. The present invention is not restricted by these names.

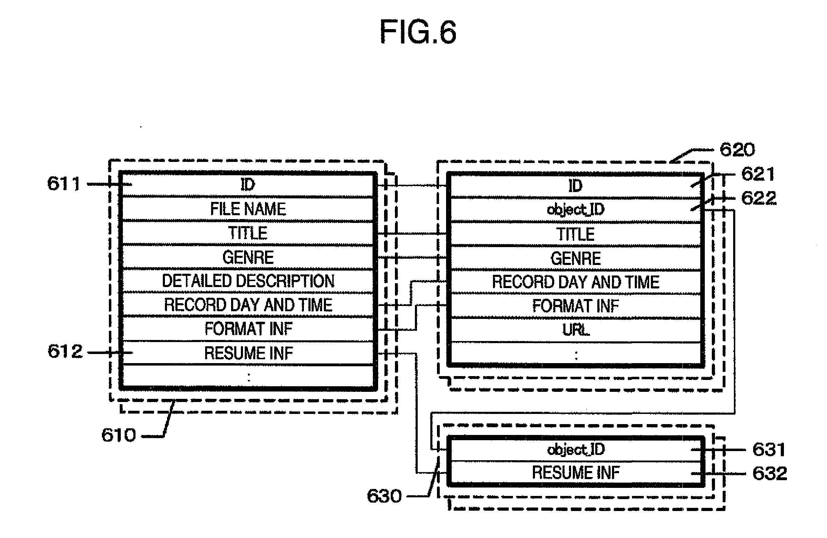

Referring now to FIG. 6, description will be given of an example of structure of tables to control a content recorded in the recording medium 202, a content to be transmitted to the receiving unit 130 or 140, and resume information indicating a reproduction suspension position of a content.

In FIG. 6, recording medium content information 610 is a table to control information of a content recorded in the recording medium 202. Network delivery content information 620 is a table to control a content to be transmitted to the receiving unit 130 or 140. Resume information 630 is a table to control resume information indicating a reproduction suspension position of a content between the transmitting unit 110 and the receiving unit 130 or 140.

The recording medium content information 610 includes an ID field 611 to uniquely define a content, resume information 612 to indicate a reproduction suspension position of the content, a file name, a title, a genre, a detailed description, record day and time, and format information. These information items are prepared for each content.

The resume information 612 may be differently defined according to the type and the recording format of the recording medium 202. For example, the resume information is represented by a packet position, a byte position, or a period of time relative to the top or first position of the content. The recording medium content information 610 is held in the content information controller 204 (or the recording medium 202) described in conjunction with FIG. 2.

The network delivery content information 620 includes ID 621 as identification to uniquely define a content in the recording medium content information 610 (the same value as the ID 611 in this embodiment), object_ID 622 to uniquely define a content to be transmitted to the receiving unit 130 or 140, a title, a genre, record day and time, format information, and a URL. These information items are prepared for each content.

In the example, the title, the genre, the record day and time, and the format information are stored in duplicate in the network delivery content information 620 as well as in the recording medium content information 610. However, these items are not necessarily prepared in the network delivery content information 620. In such situation, it is solely required to read information associated with the recording medium content information 610 by use of the ID 621. The network delivery content information 620 is held in the content information controller 204 (or the recording medium 202) described by referring to FIG. 2.

The resume information 630 includes object_ID 631 (the same value as the ID 611 in the present embodiment) as identification to uniquely define a content in the network delivery content information 620 and resume information 632 to indicate a reproduction suspension position of the content corresponding to the object_ID 631. The resume information 630 is held in the content information controller 204 described in association with FIG. 2.

Next, by referring to FIG. 9, description will be given of an outline of the PSI and SI information having stored therein information items such as a title, a genre, and a broadcasting schedule. When recording a content, the transmitting unit 110 extracts these information items from an associated transport packet and keeps the information items in the recording medium content information 610.

In an operation to transmit a content multiplexed by MPEG-TS, for example, in an operation to broadcast the content, at least one transport stream is transmitted for each frequency band by use of, for example, the frequency division. At least one content (program) including video, audio, and data signals is multiplexed for each transport stream for transmission thereof.

In FIG. 9, a Network Information Table (NIT) 910 mainly includes a transmission element field 911 to store, for example, frequency information to receive a desired program from a broadcasting radio wave, a transport stream (TS) information field 912 to store, for example, a transmission type of the transport stream corresponding to the transmission element field 911, and a program information field 913 to store, for example, information of a channel number corresponding to the transmission element field 911.

A Program Association Table (PAT) 920 includes, for each channel (program), an ID field 921 to store an identification for the NIT 910 contained in the associated transport stream and an ID field 922 to store an identification for a PTM field 940, which will be described later.

A Service Description Table (SDT) 930 includes, for each channel, a channel name 931 of a channel contained in the transport stream, a channel description 932, and channel log information 933 such as link information of a link to logo data of the channel.

A Program Map Table (PMT) 940 includes, for each stream, a stream type 941 to identify, for example, a digital television service and a digital radio audio service and a stream identification number 942 to identify data actually stored for the stream.

An event Information Table (ElT) 950 includes, for each channel, a program title 951, a broadcasting schedule 952 to indicate starting and ending points of time of a program, a genre 953 to identify a program genre, and a detailed description 954 indicating a program description. Each of these tables includes an ID, not shown, to uniquely identify a transport stream, a channel, and a program. Hence, the tables are mutually associated with each other.

From these information items, the transmitting unit 110 extracts information items such as a title, a genre, and a program schedule corresponding to a content (program) to be recorded in the recording medium 202 and holds the information items in the recording medium content information 610.

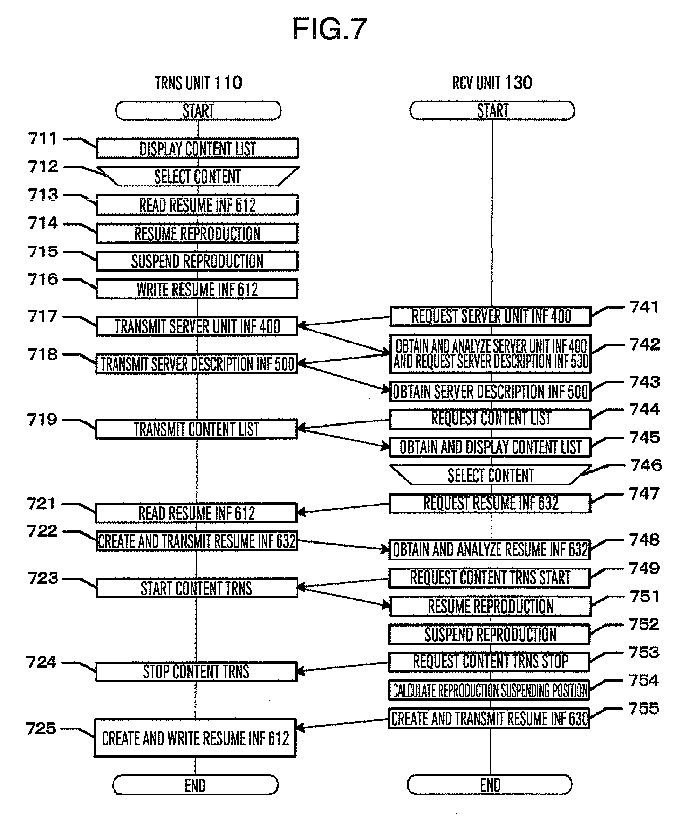

Next, referring to the flowchart of FIG. 7 and an operation screen to present information to the user, description will be given of an example of operation in which the transmitting unit 110 and the receiving units 130 and 140 communicate resume information via the home network 100 with each other. The communication of the resume information is carried out by using the operation server unit information 400, the service description information 500, the recording medium content information 610, the network delivery content information 620, and the resume information 630.

The flowchart of FIG. 7 is an example in which the transmitting unit 110 reproduces a content recorded in the recording medium 202 and then stops (suspends) the reproduction of the content. Thereafter, the receiving unit 130 resumes the reproduction of the content (via the home network 100) beginning at the reproduction suspension position and finally stops (suspends) the content reproduction.

First, the transmitting unit 110 displays a list of contents in step 711. That is, the content information controller 204 refers to the recording medium content information 610. Based on the information 610, a graphic section, not shown, creates a graphic image for the content list to output the image via the display output section 203 to the display 120.

Next, the user selects a desired content from the content list and indicates reproduction of the content in step 712. After receiving the indication, the transmitting unit 110 refers to the recording medium content information 610 to read resume information 612 of the selected content in step 713. By designating the reproduction suspension position described in the resume information 612, the transmitting unit 110 reproduces the content by use of the content recording and reproducing section 210 in step 714.

When the user issues an indication, after viewing the content, to stop (suspend) the reproduction thereof (this step is not shown), the transmitting unit 110 stops the reproduction of the content in step 715. Additionally, the resume information calculating section 205 of the transmitting unit 110 calculates the reproduction suspension position to update the resume information 612 for the content based on the reproduction suspension position in step 716.

Next, to continuously reproduce the content, the user operates the receiving unit 130 to display a list of contents which are open to the public on the home network 100 (this step is not shown).

On receiving the indication, the receiving unit 130 first issues by the server unit information receiving section 306 a request to a unit on the home network 100 for the server unit information 400 in step 741 (the request is also issued to the transmitting unit 110). After receiving the request, the transmitting unit 110 reads by the server unit information transmitting section 207 the server unit information 400 to send (return) the information 400 to the receiving unit 130 in step 717.

In the receiving unit 130, the server unit information receiving section 306 receives the server unit information 400 to interpret the information in the data layout described in conjunction with FIG. 4 and issues a request for the service description information 500 in step 742. By interpreting the resume information transmission correspondence information 431 in the server unit information 400 in step 742, the receiving unit 130 is able to determine that the transmitting unit 110 is associated with the function to transmit and to set the resume information.

When the request for the service description information 500 is received, the transmitting unit 110 obtains the information 500 by use of the server unit information transmitting section 207 to send (return) the obtained information to the receiving unit 130 in step 718.

In the receiving unit 130, the server unit information receiving section 306 receives the service description information 500 to interpret the information of the data layout described by referring to FIG. 5, in step 743. By interpreting the action list 510 and the service value table 520 in the service description information 500 in step 743, the receiving unit 130 can determine how to transmit and how to set the resume information to the transmitting unit 110.

To display a list of contents, the receiving unit 130 issues a request for content list information to the transmitting unit 110 in step 744. The operation is conducted based on the method described in the action list 510 and the service value table 520 in the service description information 500.

When the request is received, the transmitting unit 110 refers to the network delivery content information 620 to obtain information conforming to the request of the receiving unit 130 and then transmits (returns) the information thereto in step 719. The receiving unit 130 receives the content list information and displays based thereon a content list in step 745. In this connection, a graphic section, not shown, creates a graphic image of the content list to output the image to the display section 302.

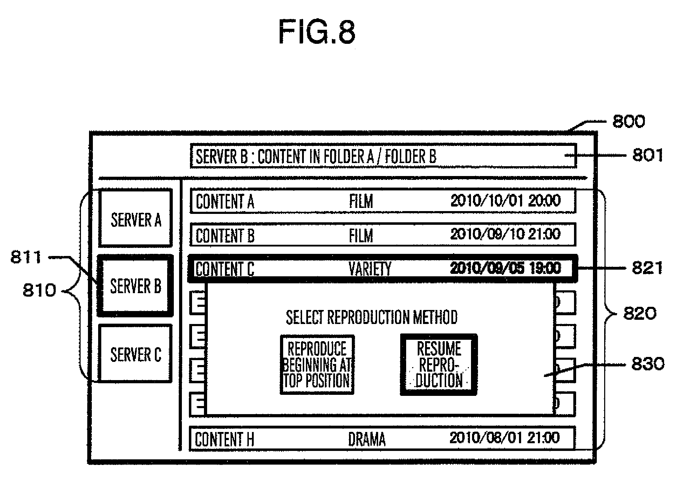

From the list of contents, the user selects a desired content to indicate reproduction thereof in step 746. In the operation, the system displays a selection screen 800, for example, as shown in FIG. 8.

In FIG. 8, a content list screen 800 primarily includes a server (transmitting unit) display area 810 and a content list display area 820. FIG. 8 shows a state in which server B 811 is selected as a transmitting unit and a content hierarchic level 801 opened by server B 811.

Content C 821 is information selected in this hierarchic level (to indicate reproduction). In step 712, content C 821 has been selected (to indicate reproduction). In this situation, the system displays a window for the user to select an operation, for example, to reproduce the content beginning at the top thereof or to resume the reproduction thereof as indicated by a reference numeral 830.

As a result, it is possible to easily indicate resumption of a suspended content according to the present invention as well as to reproduce a content beginning at the top thereof. When the receiving unit 130 stores therein the reproduction suspension position, it is also possible to allow the user to select the position. In the description below, it will be assumed that the user selects "resume reproduction" in the selection window 830.

After the indication of "resume reproduction" is received, the resume information receiving section 304 of the receiving unit 130 issues a request to the transmitting unit 110 to obtain resume information 632 of the content in step 747. The operation is conducted in the method described in the action list 510 by use of an action name 511 and arguments 512 and 513.

On receiving the request for the resume information 632, the transmitting unit 110 checks the network delivery content information 620 and the recording medium content information 610 based on the value of the ObjectID described in the argument 512 to read the reproduction suspension position from the resume information 632 of the content in step 721.

According to necessity, the transmitting unit 110 converts the value of the resume information 612 according to the format of the resume information 632 to create the resume information 632 and then sends (returns) the resume information 632 to the receiving unit 130 in step 722. In the receiving unit 130, the resume information receiving section 304 receives the resume information 632 to analyze the reproduction suspension position in step 748. In addition, the content receiving section 303 issues a content transmission start request to the transmitting unit 110 by designating the reproduction suspension position in step 749.

In response to the content transmission request issued in step 749, the content transmitting section 206 of the transmitting unit 110 sends content data to the receiving unit 130 in step 723. In the receiving unit 130, the content receiving section 303 sequentially receives the content data and a content reproducing section 310 reproduces the content in step 751.

When the user issues, after viewing the content, an indication to stop (suspend) the reproduction thereof (this step is not shown), the receiving unit 130 stops the content reproduction in step 752 and issues a request to the transmitting unit 110 to stop the transmission of the content in step 753. On receiving the request, the transmitting unit 110 stops the content transmission in step 724.

In the receiving unit 13 0, the resume information calculating section 3 07 calculates the associated reproduction suspension position in step 754 to create resume information 63 0 and transmits the information to the transmitting unit 110 in step 755. The operation is carried out based on the method described in the action list 510 by using an action name 514 and arguments 515 and 516.

After having received the resume information 630 setting request, the transmitting unit 110 refers to the network delivery content information 620 and the recording medium content information 610 based on the value of ObjectID in the argument 515, creates the resume information 612 of the content by use of the value of ResumeTime in the argument 516, and then writes the created information in step 725.

As a result, when the transmitting unit (server) reproduces a content as well as when the receiving unit (client) reproduces a content received from the server, the resume position can be mutually obtained by the server and the client. It is hence possible to uniquely control the resume position of the content on the home network.

When the client reproduces a content received from the server, the resume position is calculated by the client. Hence, it is possible to more correctly control the resume position.

The client is able to confirm whether or not the server conforms to the function to supply information of the resume position. Hence, when interpreting the content list information, it is not required to give consideration to the function. That is, the system guarantees compatibility for the interpreting section to interpret the content list information of the client not conforming to the function. In the description of the embodiment above, the transmitting unit of FIG. 2 and the receiving unit of FIG. 3 respectively include the blocks 201 to 222 and the blocks 301 to 312. However, the functions of each of the units and any function thereof, not shown, may be implemented by use of one or more Central Processing Units (CPU). For example, the functions of the sections 204 to 207 and sections 210 and 220 may be implemented by one CPU.

In the description of the present embodiment, the receiving unit (client) obtains the content list information and the resume information from the transmitting unit (server), and the resume information created when the client reproduces a content held in the server is set by the server. However, the system may be configured such that a controller other than the client obtains the content list information and the resume information from the server. It is hence possible that the user conducts operations by use of a terminal, for example, a PC or a tablet terminal to select a content and to reproduce the content based on the resume information. Description will next be given of the processing in this situation.

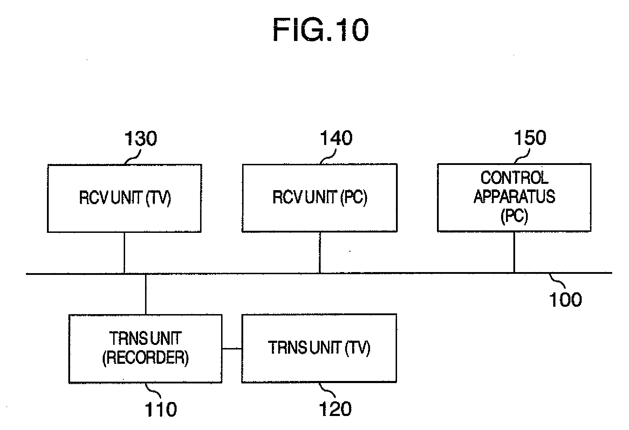

FIG. 10 shows an example of the system configuration in which a controller 150 such as a PC is additionally connected to the home network 100 shown in FIG. 1.

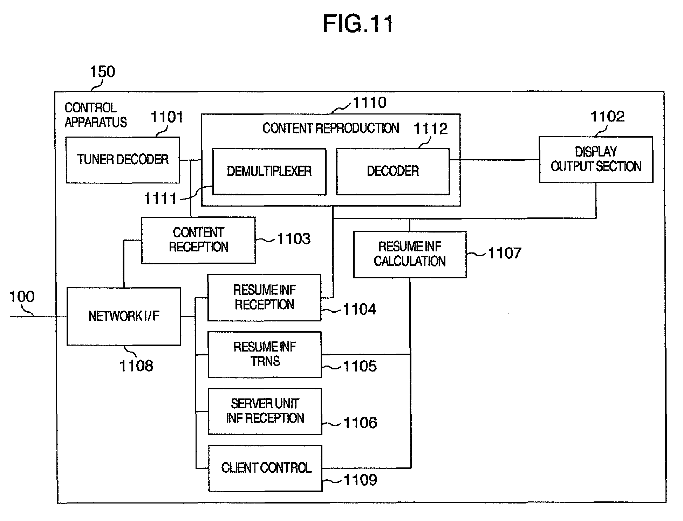

The controller 150 receives the content list information and the content resume information from the transmitting unit 110 and controls the receiving units 130 and 140 to indicate reproduction a content and suspension of reproduction of a content by using the resume information. The controller 150 may be, for example, a PC, a cellular phone, or a tablet terminal. A detailed configuration example of the controller 150 will be described later by referring to FIG. 11.

In the description of the embodiment shown in FIG. 1, the receiving units 130 and 140 transmit or receive resume information directly to or from the transmitting unit 110. However, these operations are not necessarily required in the configuration shown in FIG. 10. It is also possible that in response to an indication from the controller 150, the receiving unit 130 or 140 receives a content from the transmitting unit 110 to reproduce the content. Hence, although not shown, the configuration shown in FIG. 3 further includes a control section to receive and to interpret the content control indication from the controller 150.

Description will now be given in detail of an example of the configuration of the controller 150 by referring to FIG. 11.

The controller 150 receives content list information from the transmitting unit 110 on the home network 100 to display the information. In response thereto, the user inputs a content control indication. Based on the indication, the controller 150 instructs the receiving units 130 and 140, for example, to reproduce a content or to suspend reproduction of a content.

In FIG. 11, the controller 150 includes a tuner decoder 1101, a demultiplexer 1111, a decoder 1112, and a content receiving section 1103. Like the receiving units 130 and 140, the controller 150 receives and reproduces a digital broadcasting signal from a broadcasting network or a transport packet from the transmitting unit 110 by using the constituent components 1101, 1111, 1112, 1103. The operation is controlled almost the same way as described by referring to FIG. 3.

A network I/F section 1108 is used when information, for example, resume information, server unit information, or service description information is transmitted to or is received from the transmitting unit 110 on the home network 100. Or, the network I/F section 1108 is used when an indication, for example, to reproduce a content or to suspend reproduction of a content is issued to the receiving unit 130 or 140 based on a content control indication from the user.

A display 1102 displays operation screen images such as a menu and a content list to be presented to the user. The images are created by a graphic section, not shown.

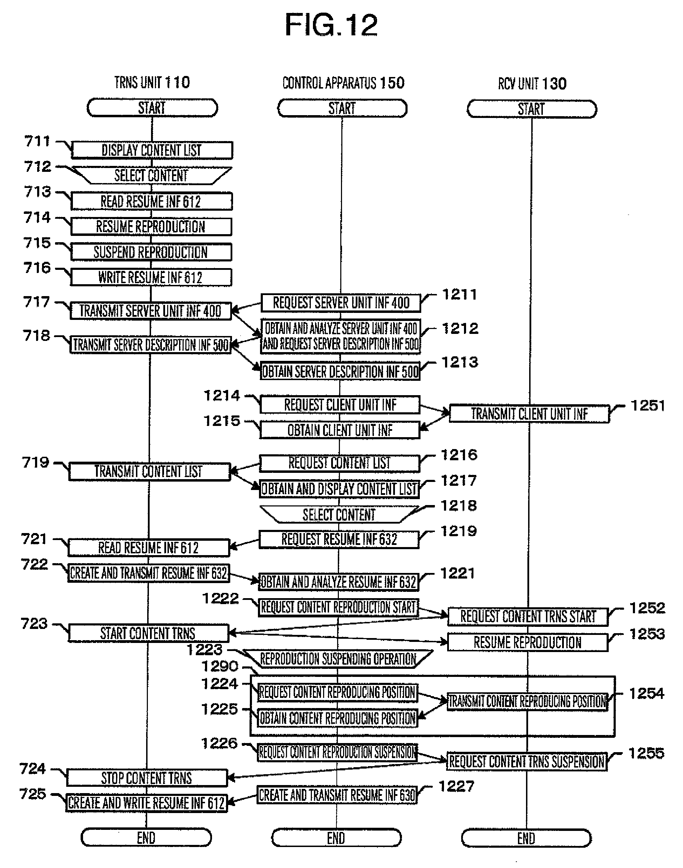

Referring now to the flowchart of FIG. 12, description will be given of an operation to exchange resume information via the controller 150 on the home network 100.

In the flowchart of an operation example shown in FIG. 12, the controller 150 receives, via the home network 100, information including resume information of a content recorded in the recording medium 202 of the transmitting unit 110 and presents the information of the content to the user. The controller 150 controls the receiving unit 130 to resume reproduction of the content beginning at a resume position. Thereafter, according to the function, the controller 150 obtains a resume position indicating a position at which the reproduction is suspended in the receiving unit 130 and then sets the resume information to the transmitting unit 110.

In FIG. 12, steps 711 to 719 and steps 721 to 725 of the transmitting unit 110 are controlled in almost the same way as the associated steps shown in FIG. 7 excepting that various information items are communicated with the controller 150 depending on cases.

First, the transmitting unit 110 displays a list of contents in step 711. In this step, the content information controller 204 refers to the recording medium content information 610. Based on the information 610, a graphic section, not shown, creates a graphic image for the content list to output the image via the display output section 203 to the display 120.

Next, the user selects a desired content from the content list and indicates reproduction of the content in step 712. After receiving the indication, the transmitting unit 110 refers to the recording medium content information 610 to read resume information 612 of the selected content in step 713. By designating the reproduction suspension position described in the resume information 612, the transmitting unit 110 reproduces the content by the content recording and reproducing section 210 in step 714.

When the user issues, after viewing the content, an indication to stop (suspend) the reproduction thereof (this step is not shown), the transmitting unit 110 stops the content reproduction in step 715. Also, the resume information calculating section 205 calculates a reproduction suspension position to update the resume information 612 for the content based on the reproduction suspension position in step 716.

Next, to continuously reproduce or to resume reproduction of the content in the receiving unit 130, the user operates the controller 150 to display a list of contents which are open to the public on the home network 100 (this step is not shown).

On receiving the indication, the controller 150 first issues by the server unit information receiving section 1106 a request to a unit on the home network 100 for the server unit information 400 in step 1211. The request is also issued to the transmitting unit 110.

After receiving the request, the transmitting unit 110 reads by the server unit information transmitting section 207 the server unit information 400 to send (return) the information 400 to the controller 150 in step 717. The controller 150 receives the server unit information 400 by the server unit information receiving section 1106 to interpret the information in the data layout described in conjunction with FIG. 4 and issues a request for the service description information 500 in step 1212.

By interpreting the resume information transmission correspondence information 431 in the server unit information 400 by the server unit information 400 in step 1212, the controller 150 is able to determine that the transmitting unit 110 is associated with the function to transmit and to set the resume information.

When the request for the service description information 500 is received, the transmitting unit 110 obtains the information 500 by the server unit information transmitting section 207 to send (return) the obtained information 500 to the controller 150 in step 718.

In the controller 150, the server unit information receiving section 1106 receives the service description information 500 to interpret the information of the data layout described by referring to FIG. 5, in step 1213. By interpreting the action list 510 and the service value table 520 in the service description information 500 in step 1213, the controller 150 can determine how to transmit and how to set the resume information to the transmitting unit 110.

In step 1214, the controller 150 issues a request for client unit information to allow the user to select a unit for the reproduction of the content. The operation is carried out by the client controller 1109, and the request is sent to a unit on the home network 100 (also to the receiving units 130 and 140).

According to the indication from the controller 150, a receiving unit including a function to reproduce the content transmits (returns) client unit information indicating presence of the function to the controller 150 in step 1251. In this example, the receiving unit 130 serves the function. The controller 150 having received the client unit information can determine based on the information in step 1215 that the receiving unit 130 is associated with the function to reproduce the content.

To display a list of contents, the controller 150 issues a request for content list information to the transmitting unit 110 in step 1216. The operation is conducted based on the method described in the action list 510 and the service value table 520 in the service description information 500.

When the request is received, the transmitting unit 110 refers to the network delivery content information 620 to obtain information conforming to the request of the controller 150 and then transmits (returns) the information thereto in step 719. The controller 150 receives the content list information and displays based thereon a content list in step 1217. Based on the client unit information obtained in step 1215, the controller 150 displays a list of receiving units for the reproduction of the content (before or after the user selects a desired content). In this step, a graphic section, not shown, creates a graphic image of the list to output the image to the display 1102.

Next, from the list of contents and receiving units displayed as above, the user selects a desired content and a desired receiving unit to indicate reproduction of the content in step 1218. The system displays a selection screen 800, for example, as shown in FIG. 8. In the description below, it will be assumed that the user selects "resume reproduction" in the selection window 830.

After the indication of "resume reproduction" is received, the resume information receiving section 1104 of the controller 150 issues a request to the transmitting unit 110 to obtain the resume information 632 of the content in step 1219. The operation is conducted in the method described in the action list 510 by use of the action name 511 and the arguments 512 and 513.

On receiving the request to obtain the resume information 632, the transmitting unit 110 checks the network delivery content information 620 and the recording medium content information 610 by use of the value of the ObjectID described in the argument 512 to obtain the reproduction suspension position from the resume information 612 of the content in step 721.

According to necessity, the transmitting unit 110 converts the value of the resume information 612 according to the format of the resume information 632 to create the resume information 632 and then sends (returns) the created resume information 632 to the controller 150 in step 722.

In the controller 150, the resume information receiving section 1104 receives the resume information 632 to analyze the reproduction suspension position in step 1221. In addition, the client controller 1109 issues a content reproduction start request to the receiving unit 130 by designating the reproduction suspension position as the reproduction start position in step 1222.

After the request is received by the receiving unit 130, the content receiving section 303 issues a content transmission start request to the transmitting unit 110 by designating the reproduction start position as the transmission start position in step 1252. In response thereto, the content transmitting section 206 of the transmitting unit 110 transmits content data of the content to the receiving unit 130 in step 723. In the receiving unit 130, the content receiving section 303 sequentially receives the content data and a content reproducing section 310 reproduces the content in step 1253.

Assume that the user issues, after viewing the content, an indication to stop (suspend) the reproduction thereof by operating the controller 150. In response to the indication, to set the reproduction position of the content in the receiving unit 130 as resume information to the transmitting unit 110, the controller 150 issues a request for the information of the content reproduction position to the receiving unit 130 in step 1224. When the request is received, the receiving unit 130 calculates the content reproduction position to send (return) the obtained position to the controller 150 in step 1254. The controller 150 receives the content reproduction position in step 1225.

In the flowchart, a step sequence 1290 including steps 1224, 1254, and 1225 is conducted according to necessity when the control unit 150 uses the information of the content reproduction position in a receiving unit. In this example, in other than the operation to obtain the resume position, for example, in an operation in which the controller 150 displays the reproduction position of the content on the display 1102, the step 1290 is conducted at a predetermined interval of time, e.g., one second to monitor the content reproduction position. In such processing, to complement the interval of time while executing the step 1290 at the interval of time, it is also possible to correct the interval of time based on information of time measured by a clock, not shown, in the controller 150.

After receiving the reproduction position in the receiving unit 130 in step 1225, the controller 150 issues a content reproduction stop request to the receiving unit 130 in step 1226. When the request is received, the receiving unit 130 issues a request to the transmitting unit 110 to stop the transmission of the content in step 1255. As a result, the transmitting unit 110 stops the transmission of the content in step 724.

Thereafter, based on the content reproduction position obtained in step 1225, the controller 150 creates the resume information 630 to send it to the transmitting unit 110 in step 1227. This operation is carried out in the method described in the action list 510 by use of the action name 514 and the arguments 515 and 516.

On receiving the request to set the resume information 63 0, the transmitting unit 110 refers to the network delivery content information 620 and the recording medium content information 610 based on the value of the "ObjectID" described in the argument 515 to create the value of the resume information 612 of the content based on the value of "ResumeTime" described in the argument 516 and then writes the created value in the resume information 612 in step 725.

As a result, when a controller other than a client reproduces a content by use of the transmitting unit (server) as well as when the receiving unit (client) reproduces a content received from the server, the resume position can be mutually obtained by the server and the client. It is hence possible to control the resume position of the content on the home network.

When the client reproduces a content received from the server, the resume position is calculated by the client. Hence, it is possible to more correctly control the resume position.

The controller is able to confirm whether or not the server conforms to the function to supply the information of the resume position. Hence, when interpreting the content list information, it is not required to give consideration to the function. That is, as for the function, the system guarantees compatibility for the section to interpret the content list information in the client not conforming to the function.

In the description of the embodiment, the transmitting unit of FIG. 2, the receiving unit of FIG. 3, and the controller of FIG. 11 respectively include the blocks 201 to 222, the blocks 301 to 312, and the blocks 1101 to 1112. However, the functions of each of the units and any function thereof, not shown, may be implemented by use of one or more Central Processing Units (CPU). For example, the functions of the sections 204 to 207 and the sections 210 and 220 may be implemented by one CPU.

The steps described in conjunction with FIGS. 7 and 12 are not limitative in the execution sequence thereof and may be appropriately exchanged. For example, it is also possible in FIG. 12 to transpose the processing of steps 1211 to 1213 and that of steps 1214 to 1215, that is, a unit to reproduce the content is first selected and then the processing for the server is executed.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A content transmitting unit (110) which reproduces a content read from a recording medium to transmit the reproduced content to a receiving unit via a network, comprising:
a content reproduction unit (210) which reproduces the content read from the recording medium;
a content information control unit (204) which manages content information including resume information indicating a resume position at which reproduction of the content is suspended; and
an interface unit (208) which communicates with the receiving unit via the network;
**characterized in that**,
when the interface unit receives a request for resume information of a content from the receiving unit, the interface unit transmits the resume information of the content to the receiving unit, and
when the interface unit receives a sending request of the content beginning at a position required based on the resume information of the content from the receiving unit, the content reproduction unit reproduces the content from a requested position and the interface unit sends the reproduced content to the receiving unit.

2. The content transmitting unit according to claim 1, wherein
the content transmitting unit suspends transmission of the content upon receiving a request for a content transmission suspension from the receiving unit, and
when the contents transmitting unit receives the resume information of the transmission suspension requested content, the content information control unit manages the received resume information.

3. The content transmitting unit according to claim 2, wherein
when the contents transmitting unit receives the resume information of the transmission suspension requested content, the content information control unit updates the resume information using the received resume information.

4. The content transmitting unit according to claim 2, wherein
upon receiving a request from the receiving unit, the content transmitting unit transmits to the receiving unit device information indicating that the content transmitting unit is associated with the resume information.

5. The content transmitting unit according to claim 1, wherein
the content transmitting unit transmits list information including ID information of contents that the content transmitting unit can transmit to the receiving unit, and
upon receiving a request for the resume information of the content identified by the ID information from the receiving unit, the content transmitting unit transmits the resume information of the identified content to the receiving unit.

6. A content receiving unit (130, 140) which receives a content transmitted from a transmitting unit via a network, comprising:
an interface unit (308) which communicates with the transmitting unit via the network;
a content processing unit (310, 307, 302) which processes the received content to display the received content; and
a content reception unit (303) which receives the content from the transmitting unit via the network,
**characterized in that**,
the content processing unit transmits a request for resume information of a content to the transmitting unit via the interface unit and obtains the resume information of the contents from the transmitting unit,
the content processing unit calculates a position at which reproduction of the content is suspended using the obtained resume information, and
the content processing unit transmits a request for content transmission from the reproduction suspended position to the transmitting unit via the interface unit to obtain the content from the transmitting unit.

7. The content receiving unit according to claim 6, wherein
the content receiving unit transmits a request of content transmission suspension to the transmitting unit to suspend acquisition of the contents, and
the content receiving unit generates resume information which is associated with a position at which display of the content is suspended and sends the resume information to the transmitting unit.

8. The content receiving unit according to claim 6,
wherein the content receiving unit obtains device information from the transmitting unit and obtains the resume information when it is confirmed that the transmitting unit is associated with the resume information.

9. The content receiving unit according to claim 6, wherein
the content receiving unit obtains list information including ID information of contents that the content transmitting unit can transmit from the transmitting unit, and
the content receiving unit transmits a request for resume information of a content identified by the ID information to the transmitting unit to obtain the resume information of the identified content from the content transmitting unit.

10. A content transmitting and receiving method for receiving at a receiving unit (130, 140) a content read from a recording medium, reproduced and transmitted by a transmitting unit (110) via a network, comprising the steps of:
by the receiving unit, sending a request for resume information of the content to the transmitting unit;
by the transmitting unit, sending the resume information of the content to the receiving unit upon receiving the request for resume information;
by the receiving unit, calculating the position at which reproduction of the content is suspended using the received resume information and transmitting a request for content transmission from the position at which reproduction of the content is suspended to the transmitting unit; and
by the transmitting unit, reproducing the content from the requested position to send the reproduced content to the receiving unit upon receiving the request for content transmission from the receiving unit.

11. The content transmitting and receiving method according to claim 10, further comprising the steps of:
by the transmitting unit, suspending transmission of the content upon receiving a request for content transmission suspension from the receiving unit, and
by the transmitting unit, managing the resume information upon receiving the resume information of the transmission suspension requested content from the receiving unit.

12. The content transmitting and receiving method according to claim 11, further comprising the step of:
by the content transmitting unit, updating the resume information using the received resume information upon receiving the resume information of the transmission suspension requested content.

13. The content transmitting and receiving method according to claim 10, further comprising the step of:
by the transmitting unit, transmitting to the receiving unit device information indicating that the content transmitting unit is associated with the resume information upon receiving a request from the receiving unit.

14. The content transmitting and receiving method according to claim 10, further comprising the steps of:
by the transmitting unit, transmitting list information including ID information of contents that the content transmitting unit can transmit to the receiving unit, and
by the receiving unit, transmitting the request for resume information of the content identified by the ID information to the transmitting unit to obtain the resume information of the content from the transmitting unit.
